# EUROPÄISCHE PATENTSCHRIFT

(11) **EP 2 943 391 B1**
(45) Veröffentlichungstag und Bekanntmachung des Hinweises auf die Patenterteilung: **22.02.2017**
(21) Anmeldenummer: 13814433.2
(22) Anmeldetag: 14.12.2013
(51) Int. Cl.: B62D 21/11

(54) **HILFSRAHMEN FÜR EIN KRAFTFAHRZEUG**
AUXILIARY FRAME FOR A MOTOR VEHICLE
CADRE AUXILIAIRE POUR UN VÉHICULE AUTOMOBILE

(30) Priorität: 10.01.2013 DE 102013000357
(43) Veröffentlichungstag der Anmeldung: 18.11.2015
(73) Patentinhaber: Audi AG, 85045 Ingolstadt (DE)
(72) Erfinder: KRAMER, Tobias, 85134 Stammham (DE)
(74) Vertreter: Reichert, Thomas Klaus
(86) Internationale Anmeldenummer: PCT/EP2013/003782
(87) Internationale Veröffentlichungsnummer: WO 2014/108157

(56) Entgegenhaltungen:
- EP-A1- 1 690 779
- DE-A1-102007 012 148
- DE-A1-102009 041 771
- DE-A1-102011 106 250
- US-B1- 6 623 020

## Beschreibung

Die Erfindung betrifft einen Hilfsrahmen für ein Kraftfahrzeug nach dem Oberbegriff des Patentanspruches 1 sowie ein Verfahren zum Zusammenbau eines solchen Hilfsrahmens nach dem Patentanspruch 11.

Ein als Fahrschemel ausgebildeter Hilfsrahmen für ein Kraftfahrzeug, der auch als Achsträger bezeichnet wird, ist allgemein bekannt und wird regelmäßig als ein Antriebsaggregat-Träger eingesetzt, der über entsprechende Anbindungsstellen mit dem Fahrzeugaufbau, das heißt mit den Karosserie-Längsträgern sowie zum Beispiel mit bodenseitigen Knotenpunkten der A-Säule, verschraubt ist. Derartige Hilfsrahmen können sowohl im Bereich der Vorderachsen als auch im Bereich der Hinterachsen Verwendung finden.

Aus der DE 10 2011 101 408 A1 ist ein Hilfsrahmen für ein Kraftfahrzeug gezeigt, der zum Beispiel einen rechteckförmigen geschlossenen Rahmen aufweist, bei dem die vorderen und hinteren Querträger sowie die seitlichen Längsträger über Knotenelemente, zum Beispiel Aluminium-Gussknoten, miteinander verbunden sind. An den vorderen und hinteren Gussknoten sind jeweils Anbindungspunkte zur Verschraubung des Hilfsrahmens am Fahrzeugaufbau vorgesehen. Zudem sind an den vorderen und hinteren Gussknoten auch weitere Funktionen integriert, zum Beispiel Lenkerkonsolen für die Lenker der Radaufhängung. Der aus der DE 10 2011 101 408 A1 bekannte Hilfsrahmen weist zudem ein als Strebenkreuz ausgebildetes Verstärkungselement auf, in dem die hinteren Gussknoten integral angeformt sein können. Das Verstärkungselement ist an seinem vorderen Ende an ersten Anbindungsstellen, zum Beispiel Gewindebutzen, in Schraubverbindung mit den vorderen Gussknoten. Die beiden vorderen Gussknoten sind zudem über den vorderen Querträger miteinander verbunden. Dieser ist um einen Längsversatz vor den oben genannten ersten Anbindungsstellen (oder vor dem Verstärkungselement) angeordnet. Speziell im Bereich des vorderen Querträgers werden hohe Betriebskräfte eingeleitet. Dadurch ist insbesondere der vordere Querträger mit hohem Materialeinsatz, das heißt hohen Wandstärken, auszuführen, um die Anforderungen an die Bauteilsteifigkeit zu erfüllen.

Aus der EP 1 690 779 A1 ist ein gattungsgemäßer Hilfsrahmen für ein Fahrzeug bekannt, bei dem ein als Schubfeld wirkendes Verstärkungselement in der Fahrzeuglängsrichtung nach vorne mit zumindest einem Tragschenkel verlängert ist. Aus der DE 10 2009 041 771 A1 ist ein weiterer Hilfsrahmen für ein Kraftfahrzeug bekannt, bei dem zwischen den Hilfsrahmen-Längsträgern ein als Schubfeld wirkendes Verstärkungselement abgestützt ist.

Die Aufgabe der Erfindung besteht darin, einen Hilfsrahmen für ein Kraftfahrzeug sowie ein Verfahren zur Herstellung eines solchen Hilfsrahmens bereitzustellen, bei dem die Bauteilsteifigkeit des Hilfsrahmens in einfacher Weise erhöht werden kann.

Die Aufgabe ist durch die Merkmale des Patentanspruches 1 gelöst. Bevorzugte Weiterentwicklungen der Erfindung sind in den Unteransprüchen offenbart.

Die Erfindung beruht auf dem Sachverhalt, dass trotz des vorderen Querträgers und des flächigen, plattenförmigen Versteifungselementes die Bauteilsteifigkeit des Hilfsrahmens speziell bei höheren Motorisierungsgraden problematisch sein kann. Vor diesem Hintergrund ist gemäß dem kennzeichnenden Teil des Patentanspruches 1 das Verstärkungselement in der Fahrzeuglängsrichtung nach vorne mit einem Tragschenkel verlängert. Der Tragschenkel ist unter Überbrückung des oben genannten Längsversatzes an einer zweiten Anbindungsstelle am vorderen Querträger bauteilsteif angebunden. Die Anbindung des Tragschenkels am vorderen Querträger kann lösbar, zum Beispiel mittels Schraubverbindung, oder aber auch unlösbar, zum Beispiels mittels Schweißverbindung, erfolgen.

Die zweite Anbindungsstelle zwischen dem Tragschenkel des Verstärkungselementes und dem vorderen Querträger kann in der Fahrzeugquerrichtung zwischen den beiden vorderen Knotenelementen positioniert sein. Durch die zusätzliche Anbindung des Verstärkungselementes am vorderen Querträger ergibt sich ein weiterer Lastpfad, über den die Betriebskräfte vom vorderen Querträger in das Verstärkungselement eingeleitet werden können, wodurch die Bauteilsteifigkeit des Hilfsrahmens deutlich erhöht ist.

Der Tragschenkel kann in einer Ausführungsform ein materialeinheitlicher und/oder einstückiger Bestandteil des Verstärkungselementes sein. Dabei kann sich der Tragschenkel im Wesentlichen in horizontaler Ausrichtung erstrecken. Der Tragschenkel kann zudem als ein Flachprofil ausgeführt sein, etwa eine plattenförmige, flächige Verlängerung des Verstärkungselementes. Das Verstärkungselement kann ebenfalls ein flächiges, plattenförmiges Bauteil sein (zum Beispiel eine Blechplatine). Zudem kann das Verstärkungsteil in der Fahrzeugquerrichtung voneinander beabstandete hintere Knotenelemente aufweisen, mit denen der Hilfsrahmen am Fahrzeugaufbau anbindbar ist. Das Verstärkungselement kann sich vollflächig zwischen den vorderen und den hinteren Knotenelementen erstrecken. Alternativ dazu kann das Verstärkungselement quer, diagonal und/oder längsverlaufende Streben aufweisen, die fachwerkartig angeordnet sind beziehungsweise als ein Strebenkreuz angeordnet sind.

Zur weiteren Steigerung der Bauteilsteifigkeit ist der vordere Querträger - im Gegensatz zum Tragschenkel des Verstärkungselementes - nicht als ein Flachprofil in horizontaler Ausrichtung, sondern vielmehr als ein in die Fahrzeughochrichtung aufgestelltes Hochkantprofil ausgeführt. Zudem ist der Tragschenkel des Verstärkungselementes an der Unterseite des vorderen Querträgers montiert. Dadurch ergibt sich im Querschnitt betrachtet eine L-förmige Versteifungsstruktur mit dem horizontalen Tragschenkel sowie dem vertikal nach oben aufgestellten vorderen Querträger.

Der vordere Querträger kann in Hinblick auf eine weitere Erhöhung der Bauteilsteifigkeit ein geschlossenes Hohlprofil aufweisen. Alternativ dazu kann der vordere Querträger auch als ein offenes Winkelprofil gestaltet sein, wodurch zusätzlicher Bauraum, zum Beispiel zur Anordnung eines Lenkgetriebes oder anderer bauraumbeanspruchender Komponenten des Fahrwerks, bereitstellbar ist, etwa einem Drehsteller.

Der Bauraum für ein solches Lenkgetriebe kann bevorzugt in der Fahrzeuglängsrichtung hinter dem vorderen Querträger vorgesehen sein. Von Vorteil ist es, wenn der Bauraum für das Lenkgetriebe nach unten vom Tragschenkel des Verstärkungselementes begrenzt ist, wodurch das Lenkgetriebe zum Beispiel gegen Steinschlag geschützt angeordnet ist.

Speziell bei der im Fahrzeugbau üblichen Großserienproduktion ist eine einfache Anpassung des Hilfsrahmens an Fahrzeugtypen unterschiedlicher Motorisierung von Vorteil, da logistisch vorteilhaft weniger Bauteile vorgehalten werden müssen. Vor diesem kann bei der Montage des Hilfsrahmens zunächst eine Hilfsrahmen-Grundstruktur bereitgestellt werden, die unabhängig vom jeweiligen Fahrzeugtyp einsetzbar ist. Die Hilfsrahmen-Grundstruktur bildet eine Vormontageeinheit, bevorzugt eine Schweißgruppe, bei der der vordere Querträger und das Verstärkungselement und gegebenenfalls auch die hinteren Knotenelemente einstückig und bevorzugt unlösbar miteinander verbunden sind. Zur Individualisierung des Hilfsrahmens können dann je nach Fahrzeugtyp speziell angepasste vordere Knotenelemente als separate Bauteil der Vormontageeinheit montiert werden. Bevorzugt kann der vordere Querträger an seinen beiden in der Querrichtung angeordneten Stirnseiten jeweils über dritte Anbindungsstellen lösbar, zum Beispiel über eine Schraubverbindung, mit den beiden vorderen Knotenelementen verbunden sein. Die dritten Anbindungsstellen und die oben genannten ersten Anbindungsstellen (das heißt zwischen dem Verstärkungselement und den beiden vorderen Knotenelementen) sind über den oben erwähnten Längsversatz voneinander beabstandet.

Besonders bevorzugt ist in der Vormontageeinheit das Verstärkungselement, der vordere Querträger und auch die hinteren Knotenelemente unlösbar zur Vormontageeinheit zusammengefasst.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen erläutert.

Es zeigen:
- Fig. 1: in einer perspektivischen Darstellung den Zusammenbauzustand eines Hilfsrahmens;
- Fig. 2: eine Schnittansicht entlang der Schnittebene I-I aus der Fig. 1;
- Fig. 3: in einer Ansicht entsprechend der Fig. 2, bei der der vordere Querträger ein offenes Winkelprofil aufweist;
- Fig. 4: in einer Explosionsdarstellung einen Vormontagezustand des Hilfsrahmens.

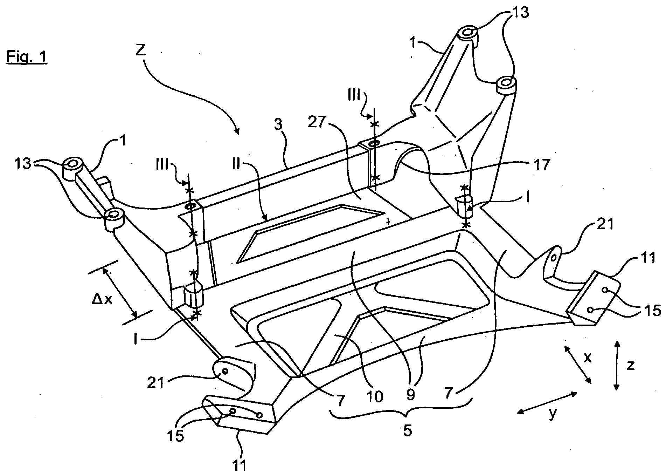

In der Fig. 1 ist ein Hilfsrahmen in Alleinstellung gezeigt. Der Hilfsrahmen weist in der Fahrzeuglängsrichtung x jeweils seitliche vordere Knotenelemente 1 auf, die hier beispielhaft als kastenförmige Aluminium-Gussknoten gebildet sind. Die beiden Knotenelemente 1 sind in der Fahrzeugquerrichtung y mit einem Hilfsrahmen-Querträger 3 verbunden. In der Fahrzeuglängsrichtung x nach hinten schließt sich an den beiden vorderen Gussknoten 1 ein flächiges, plattenförmiges Verstärkungselement 5 an, das in etwa fachwerkartig mit Längsstreben 7, Querstreben 9 sowie diagonal verlaufende Streben 10 ausgeführt ist. Am hinteren Ende des Verstärkungselementes 5 sind materialeinheitlich und einstückig hintere Knotenelemente 11 integral am Verstärkungselement 5 angeformt.

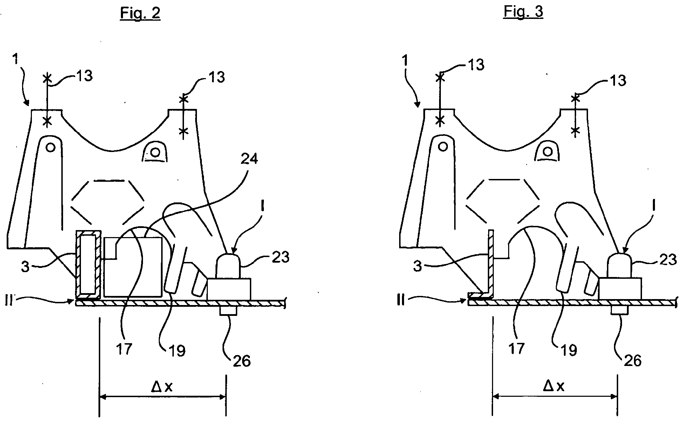

Die beiden vorderen Knotenelemente 1 weisen oberseitig jeweils Schraubstellen 13 zur Anbindung an einem nicht dargestellten Karosserie-Längsträger auf. Demgegenüber weisen die beiden hinteren Knotenelemente 11 jeweils Schraubstellen 15 zur Anbindung am Längsträger am Fuß der A-Säule des Fahrzeugaufbaus auf. Unterhalb der Schraubstellen 13 der beiden vorderen Knotenelemente 1 ist eine Lenkungsgasse 17 mit Lenkerkonsolen 19 (Fig. 2 oder 3) vorgesehen, an denen nicht dargestellte Radaufhängungs-Lenker anlenkbar sind. Durch, die beiden Lenkungsgassen 17 der vorderen Knotenelemente 1 werden Lenkstangen eines nicht dargestellten Lenkgetriebes geführt, dessen Bauraum 24 (Fig. 2) in der Fahrzeuglängsrichtung x hinter dem vorderen Querträger 3 angeordnet ist.

In den beiden hinteren Knotenelementen 11 sind neben den Schraubstellen 15 ebenfalls Lenkerkonsolen 21 für hintere Radaufhängungs-Lenker vorgesehen.

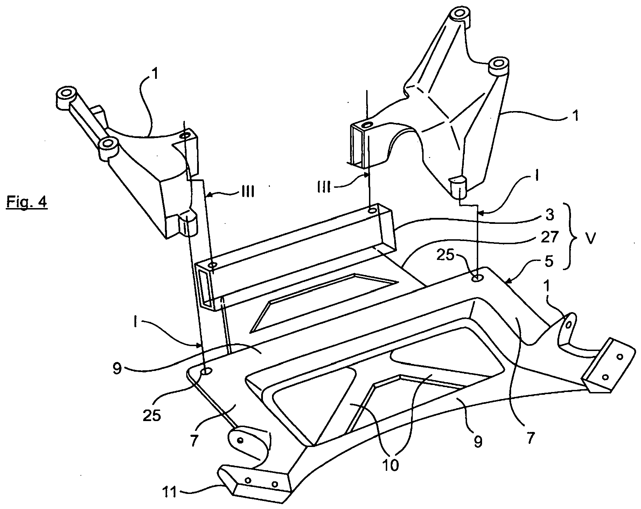

Gemäß den Fig. 1 bis 3 sind die vorderen Enden der beiden Längsstreben 7 des Verstärkungselementes 5 an ersten Anbindungsstellen I mit den beiden vorderen Knotenelementen 1 verbunden. Jede der ersten Anbindungsstellen I ist jeweils durch einen hinteren, am Knotenelement 1 angeformten Gewindebutzen 23 sowie durch ein dazu korrespondierendes Schraubloch 25 (Fig. 4) im Verstärkungselement 5 ausgeführt, durch das ein Schraubbolzen 26 (Fig. 2 oder 3) geführt ist, der das Verstärkungselement 5 mit dem Gewindebutzen 23 des Knotenelementes 1 verspannt. Die zwischen den beiden Längsstreben 7 verlaufende Querstrebe 9 ist in der Fahrzeuglängsrichtung x nach vorne mit einem Tragschenkel 27 materialeinheitlich und einstückig bis zum vorderen Querträger 3 verlängert.

Der Tragschenkel 27 ist gemäß der Fig. 2 oder 3 mit seinem vorderen Ende an einer zweiten Anbindungsstelle II an, der Unterseite des vorderen Querträgers 3 unlösbar verschweißt. Gleichzeitig ist der vordere Querträger 3 an seinen in der Fahrzeugquerrichtung y ausgerichteten Stirnseiten über dritte Anbindungsstellen III (Fig. 1) mit korrespondierenden Gewindebutzen des vorderen Knotenelementes 1 verschraubt. Die dritten Anbindungsstellen III können bevorzugt zum Beispiel über eine doppelte Z-Verschraubung realisiert sein, bei der die beiden Schraubbolzen von oben und von unten in der Fahrzeugquerrichtung y versetzt sind.

Der fest zwischen dem vorderen Querträger 3 und dem Verstärkungselement 5 befestigte Tragschenkel 27 bildet im Fahrzeugbetrieb einen zusätzlichen Lastpfad, über den die Betriebskräfte von dem vorderen Querträger in das Verstärkungselement 5 nach hinten weitergeleitet werden können. Der Tragschenkel 27 ist gemäß den Fig. 2 und 3 ein in etwa horizontal ausgerichtetes, plattenförmiges Flachprofil, wohingegen der vordere Querträger 3 ein in der Fahrzeughochrichtung aufgestelltes Hochkantprofil ist. Insgesamt ergibt sich dadurch eine in etwa L-förmige Versteifungsstruktur, die sowohl in der x/y-Ebene als auch in der y/z-Ebene die Bauteilsteifigkeit im vorderen Bereich des Hilfsrahmens deutlich erhöht.

Die erste Anbindungsstelle I und die dritte Anbindungsstelle III sind gemäß der Fig. 2 oder 3 über einen Längsversatz Δx voneinander beabstandet. Der Tragschenkel 27 überbrückt dabei den Längsversatz Δx.

In der Fig. 3 ist im Gegensatz zur Fig. 2 der vordere Querträger 3 nicht als ein geschlossenes Hohlprofil, sondern als ein offenes Winkelprofil ausgeführt. Auf diese Weise kann zusätzlicher Bauraum gewonnen werden, der zum Beispiel vom nicht dargestellten Lenkungsgetriebe einnehmbar ist.

In der Fig. 4 ist der Hilfsrahmen in einem Vormontagezustand V gezeigt. Demzufolge sind das Verstärkungselement 5 mit seinen Streben 7, 9, 10 sowie mit den beiden hinteren Knotenelementen 11 zu einer Vormontageeinheit zusammengefasst, bei der sämtliche, oben dargelegten Bauteile miteinander unlösbar, zum Beispiel durch Schweißverbindung, miteinander verbunden sind. Die Vormontageeinheit V bildet eine Hilfsrahmen-Grundstruktur, die unabhängig vom jeweiligen Fahrzeugtyp bei der Fahrzeugmontage eingesetzt wird.

Zur Individualisierung des Hilfsrahmens werden jeweils dem Fahrzeugtyp beziehungsweise dessen Motorisierung entsprechende vordere Knotenelemente 1 ausgewählt und als separate Bauteile an den ersten und dritten Anbindungsstellen I, III mit dem Verstärkungselement 5 sowie mit den Stirnseiten des vorderen Querträgers 3 verschraubt.

## Patentansprüche

1. Hilfsrahmen für ein Kraftfahrzeug, mit zwei, in einer Fahrzeugquerrichtung (y) voneinander beabstandeten vorderen Knotenelementen (1) zur Anbindung an einem Fahrzeugaufbau, die über einen vorderen Querträger (3) miteinander verbunden sind, und einem Verstärkungselement (5), das in der Fahrzeugquerrichtung (y) voneinander beabstandete hintere Knotenelemente (11) zur Anbindung an den Fahrzeugaufbau aufweist, und um einen Längsversatz (Δx) vom vorderen Querträger (3) beabstandet an ersten Anbindungsstellen (I) lösbar an den beiden vorderen Knotenelementen (1) montiert ist, wobei das Verstärkungselement (5) in der Fahrzeuglängsrichtung (x) nach vorne mit zumindest einem Tragschenkel (27) verlängert ist, **dadurch gekennzeichnet, dass** der Tragschenkel (27) unter Überbrückung des Längsversatzes (Δx) an einer zweiten Anbindungsstelle (II) am vorderen Querträger (3) in Schweißverbindung angebunden ist, dass der Tragschenkel (27) an einer Unterseite des vorderen Querträgers (3) montiert ist, und der vordere Querträger (3) ein in die Fahrzeughochrichtung (z) aufgestelltes Hochkantprofil ist, und dass der Tragschenkel (27) des Verstärkungselements (5) und der vordere Querträger (3) im Querschnitt betrachtet eine etwa L-förmige Versteifungsstruktur bilden.

2. Hilfsrahmen nach Anspruch 1, **dadurch gekennzeichnet, dass** die zweite Anbindungsstelle (II) in der Fahrzeugquerrichtung (y) zwischen den beiden vorderen Knotenelementen (1) angeordnet ist.

3. Hilfsrahmen nach Anspruch 1 oder 2, **dadurch gekennzeichnet, dass** der Tragschenkel (27) materialeinheitlicher und/oder einstückiger Bestandteil des Verstärkungselements (5) ist, und/oder dass sich der Tragschenkel (27) im Wesentlichen in horizontaler Ausrichtung erstreckt, und zwar insbesondere als ein Flachprofil.

4. Hilfsrahmen nach einem der vorhergehenden Ansprüche, **dadurch gekennzeichnet, dass** der Tragschenkel (27) des Verstärkungselements (5) und der vordere Querträger (3) an der zweiten Anbindungsstelle (II) unlösbar miteinander verbunden sind, und/oder dass der vordere Querträger (3) an seinen beiden Stirnseiten jeweils über dritte Anbindungsstellen (III) lösbar, insbesondere über eine Schraubverbindung, mit den beiden vorderen Knotenelementen (1) verbunden ist.

5. Hilfsrahmen nach einem der vorhergehenden Ansprüche, **dadurch gekennzeichnet, dass** der vordere Querträger (3) ein geschlossenes Hohlprofil oder ein offenes Winkelprofil ist.

6. Hilfsrahmen nach einem der vorhergehenden Ansprüche, **dadurch gekennzeichnet, dass** das Verstärkungselement (5) ein plattenförmiges, flächiges Bauteil ist, und/oder dass das Verstärkungselement (5) quer, diagonal und/oder längs verlaufende Streben (7, 9, 10) aufweist und insbesondere als ein Strebenkreuz ausgebildet ist.

7. Hilfsrahmen nach einem der vorhergehenden Ansprüche, **dadurch gekennzeichnet, dass** in der Fahrzeuglängsrichtung (x) hinter dem vorderen Querträger (3) ein Bauraum (24) für ein Lenkgetriebe vorgesehen ist, der vom Tragschenkel (27) des Verstärkungselements (5) nach unten begrenzt ist.

8. Hilfsrahmen nach einem der vorhergehenden Ansprüche, **dadurch gekennzeichnet, dass** die vorderen Knotenelemente (1) in einem Vormontagezustand des Hilfsrahmens voneinander separate Bauteile sind, die in einem Zusammenbauzustand (Z) des Hilfsrahmens an den ersten, zweiten und/oder dritten Anbindurigsstellen (I, II, III) am Verstärkungselement (5) montiert sind.

9. Hilfsrahmen nach einem der vorhergehenden Ansprüche, **dadurch gekennzeichnet, dass** das Verstärkungselement (5), der vordere Querträger (3) und/oder die hinteren Knotenelemente (11), insbesondere unlösbar, zu einer Vormontageeinheit, etwa eine Schweißgruppe, zusammengefasst sind.

10. Verfahren zum Zusammenbau eines Hilfsrahmens nach einem der vorhergehenden Ansprüche.

11. Verfahren nach Anspruch 10, **dadurch gekennzeichnet, dass** als Hilfsrahmen-Grundstruktur eine Vormontageeinheit (V) bereitgestellt wird, die insbesondere den vorderen Querträger (3), das Verstärkungselement (5) und gegebenenfalls die hinteren Knotenelementen (1) aufweist, und dass zur Individualisierung des Hilfsrahmens die vorderen Knotenelemente (1) als separate Bauteile an der Vormontageeinheit (V) montiert werden.

## Claims

1. Auxiliary frame for a motor vehicle, comprising two front joint elements (1), spaced apart from one another in a transverse direction (y) of the vehicle, for attachment to a vehicle body, which are connected by a front cross member (3), and a reinforcement element (5) comprising rear joint elements (11), spaced apart from one another in the transverse direction (y) of the vehicle, for attachment to the vehicle body, said reinforcement element being detachably mounted on first connecting points (I) on the two front joint elements (1) so as to be spaced apart from the front cross member (3) by an offset (Δx) in longitudinal direction, wherein the reinforcement element (5) in the longitudinal direction (x) of the vehicle is extended forwards by at least one support leg (27), **characterized in that** the support leg (27), bridging the longitudinal offset (Δx), is connected by a welded joint at a second connecting point (II) to the front cross member (3), the support leg (27) is mounted on a bottom side of the front cross member (3), and the front cross member (3) is an on edge section mounted in the vertical direction (z) of the vehicle, and the support leg (27) of the reinforcement element (5) and the front cross member (3), when viewed in cross section, form an approximately L-shaped reinforcing structure.

2. Auxiliary frame according to claim 1, **characterized in that** the second connecting point (II) is arranged in the transverse direction (y) of the vehicle between both front joint elements (1).

3. Auxiliary frame according to claim 1 or 2, **characterized in that** the support leg (27) is of a same material as and/or a one-piece component of the reinforcement element (5), and/or the support leg (27) substantially extends in a horizontal direction, and in particular as a flat section.

4. Auxiliary frame according to any of the preceding claims, **characterized in that** the support leg (27) of the reinforcement element (5) and the front cross member (3) are non-detachably connected at the second connecting point (II), and/or the front cross member (3), on its two end sides, is detachably connected at respective third connecting points (III), in particular by a screw connection, to the two front joint elements (1).

5. Auxiliary frame according to any of the preceding claims, **characterized in that** the front cross member (3) is a closed hollow section or an open angled section.

6. Auxiliary frame according to any of the preceding claims, **characterized in that** the reinforcement element (5) is a plate-shaped, flat component, and/or the reinforcement element (5) has transverse, diagonally and/or longitudinally extending struts (7, 9, 10), and in particular is configured as a cross strut.

7. Auxiliary frame according to any of the preceding claims, **characterized in that** in the longitudinal direction (x) of the vehicle, an installation space (24) for a steering gear is provided behind the front cross member (3), which is delimited at the bottom by the support leg (27) of the reinforcement element (5).

8. Auxiliary frame according to any of the preceding claims, **characterized in that** in a pre-assembled state of the auxiliary frame, the front joint elements (1) are components that are separate from each other, which, in an assembled state (Z) of the auxiliary frame are mounted on the reinforcement element (5) at the first, second and/or third connecting points (I, II, III).

9. Auxiliary frame according to any of the preceding claims, **characterized in that** the reinforcement element (5), the front cross member (3) and/or the rear joint elements (11) are combined, in particular non-detachably, in a pre-assembly unit, for example a welded assembly.

10. Method for assembling an auxiliary frame according to any of the preceding claims.

11. Method according to claim 10, **characterized in that** a pre-assembly unit (V) is provided as auxiliary frame basic structure, which in particular comprises the front cross member (3), the reinforcement element (5) and, where appropriate, the rear joint elements (1), and, to individualise the auxiliary frame, the front joint elements (1) are mounted on the pre-assembly unit (V) as separate components.

## Revendications

1. Faux-châssis pour un véhicule automobile, comprenant deux éléments formant noeuds avant (1), tenus à distance l'un de l'autre dans une direction transversale de véhicule (y), destinés à être raccordés à une carrosserie de véhicule, lesquels sont reliés l'un à l'autre par l'intermédiaire d'une traverse avant (3), et comprenant un élément de renfort (5), qui présente des éléments formant noeuds arrière (11), tenus à distance l'un de l'autre dans la direction transversale de véhicule (y), destinés à être raccordés à la carrosserie de véhicule et qui est monté au niveau des deux éléments formant noeuds avant (1) de manière amovible au niveau de premiers points de raccordement (I), à distance, selon un décalage longitudinal (Δx), de la traverse avant (3), l'élément de renfort (5) étant prolongé vers l'avant, dans la direction longitudinale de véhicule (x), avec au moins un montant porteur (27), **caractérisé en ce que** le montant porteur (27) est raccordé par un assemblage par soudage à la traverse avant (3) au niveau d'un deuxième point de raccordement (II) en passant par-dessus le décalage longitudinal (Δx), **en ce que** le montant porteur (27) est monté au niveau d'un côté inférieur de la traverse avant (3), et **en ce que** la traverse avant (3) est un profilé sur chant placé debout dans la direction verticale de véhicule (z), et **en ce que** le montant porteur (27) de l'élément de renfort (5) et la traverse avant (3) forment, vus en coupe transversale, une structure de renforcement à peu près en forme de L.

2. Faux-châssis selon la revendication 1, **caractérisé en ce que** le deuxième point de raccordement (II) est disposé, dans la direction transversale de véhicule (y), entre les deux éléments formant noeuds avant (1).

3. Faux-châssis selon la revendication 1 ou 2, **caractérisé en ce que** le montant porteur (27) fait partie intégrante de l'élément de renfort (5) par uniformité de matière et/ou d'un seul tenant, et/ou **en ce que** le montant porteur (27) s'étend sensiblement selon une orientation horizontale, et ce en particulier sous la forme d'un profilé plat.

4. Faux-châssis selon l'une quelconque des revendications précédentes, **caractérisé en ce que** le montant porteur (27) de l'élément de renfort (5) et la traverse avant (3) sont assemblés l'un à l'autre de manière inamovible au niveau du deuxième point de raccordement (II), et/ou **en ce que** la traverse avant (3) est reliée par ses deux extrémités frontales, respectivement par l'intermédiaire de troisièmes points de raccordement (III), de manière amovible, en particulier par l'intermédiaire d'un assemblage par vissage, aux deux éléments formant noeuds avant (1).

5. Faux-châssis selon l'une quelconque des revendications précédentes, **caractérisé en ce que** la traverse avant (3) est un profilé creux fermé ou un profilé en cornière ouvert.

6. Faux-châssis selon l'une quelconque des revendications précédentes, **caractérisé en ce que** l'élément de renfort (5) est un composant plat, en forme de plaque, et/ou **en ce que** l'élément de renfort (5) présente des jambes de force (7, 9, 10) s'étendant transversalement, diagonalement et/ou longitudinalement et est réalisé en particulier sous la forme d'une jambe de force en croix.

7. Faux-châssis selon l'une quelconque des revendications précédentes, **caractérisé en ce qu'**un espace de construction (24) pour un mécanisme de direction, qui est délimité vers le bas par le montant porteur (27) de l'élément de renfort (5), est prévu derrière la traverse avant (3), dans la direction longitudinale de véhicule (x).

8. Faux-châssis selon l'une quelconque des revendications précédentes, **caractérisé en ce que** les éléments formant noeuds avant (1) sont, dans un état prémonté du faux-châssis, des composants séparés les unes des autres qui, dans un état assemblé (Z) du faux-châssis, sont montés au niveau de l'élément de renfort (5) au niveau des premier, deuxième et/ou troisième points de raccordement (I, II, III).

9. Faux-châssis selon l'une quelconque des revendications précédentes, **caractérisé en ce que** l'élément de renfort (5), la traverse avant (3) et/ou les éléments formant noeuds arrière (11), sont réunis, en particulier de manière inamovible, en une unité prémontée, à peu près un groupe soudé.

10. Procédé pour l'assemblage d'un faux-châssis selon l'une quelconque des revendications précédentes.

11. Procédé selon la revendication 10, **caractérisé en ce qu'**est fournie, en tant que structure de base de faux-châssis, une unité prémontée (V), qui présente en particulier la traverse avant (3), l'élément de renfort (5) et, le cas échéant, les éléments formant noeuds arrière (1), et **en ce que**, pour l'individualisation du faux-châssis, les éléments formant noeuds avant (1) sont montés sous la forme de composants séparés au niveau de l'unité prémontée (V).
